# EUROPEAN PATENT SPECIFICATION

(11) **EP 2 331 310 B1**
(45) Date of publication and mention of the grant of the patent: **21.08.2019**
(21) Application number: 09811136.2
(22) Date of filing: 07.09.2009
(51) Int. Cl.: B29B 15/12

(54) **IMPREGNATION PLANT AND METHOD**
IMPRÄGNIERANLAGE UND -VERFAHREN
DISPOSITIF ET PROCÉDÉ D'IMPRÉGNATION

(30) Priority: 05.09.2008 EP 08388028
(43) Date of publication of application: 15.06.2011
(73) Proprietor: Per Aarsleff A/S, 8230 Abyhoj (DK)
(72) Inventor: BOYER, Manfred Josef, DK-8310 Tranbjerg (DK); RASMUSSEN, Bent Sloth, DK-6000 Kolding (DK); RASMUSSEN, Finn, DK-8381 Tilst (DK)
(74) Representative: Budde Schou A/S
(86) International application number: PCT/EP2009/061560
(87) International publication number: WO 2010/026250

(56) References cited:
- GB-A- 1 080 562
- JP-A- 4 193 506
- JP-A- 60 247 509
- JP-A- 61 051 312
- JP-A- 61 051 314
- US-A- 3 730 678

## Description

The invention relates to an impregnation station and method for impregnating a liner.

Pipelines are commonly used to transport fluids over a long distance. Faulty pipeline systems may be renovated by introducing a lining tube into the pipeline. The lining tube, which further on will be referred to as a liner, may be placed inside the faulty pipeline such that the inner walls of the pipeline are completely covered by the liner. The liner may be used to repair faults such as leakage by sealing the interior of the pipeline to the walls of the pipeline. Leaking pipelines may constitute a hazard for the environment and for personal health, since contaminated and/or dangerous fluids may escape the pipeline into the surrounding outside environment. Alternatively, the liner may be used preventively to repair worn, damaged or badly maintained pipelines to prevent further damage, which may eventually lead to a leakage.

The lining technology may be used on any pipeline system such as gas pipelines, water pipelines etc. The pipelines may have any orientation, such as e.g. vertical or horizontal. Further, the location of the pipeline may be e.g. either below ground or above ground, indoor or outdoor, in private buildings or in industrial environments. The liner may be installed by simply pulling it into place inside the pipeline, or by using eversion. By eversion is meant the technology of fastening one end of the liner onto a manhole and subsequently inverting the liner into the pipeline by the use of water, steam or pressurized gas.

The major advantage of the above technology is achieved in connection with underground pipelines, such as sewer pipelines. The renovation may be performed quickly and trenchless with minimum inconvenience to the surroundings and considerable lower costs compared to a complete replacement of the pipeline.

The liner is preferably made of a soft and flexible material, which is easy to package and transport to the installation site and which may be inserted into the pipeline system from the outside through e.g. a manhole or the like. When the liner is put in place inside the pipeline system it should be hardened for maximum stability. The liner is therefore preferably made from a fibre material. The fibre material may be a woven or non-woven material and may e.g. be of any of the following types: glass, carbon, aramid, polyester, polyacrylonitrile, mineral, viscose, polyamide, polyacrylic or natural fibres or a combination of the above. The fibre material is impregnated with a resin, such as styrene/polyester or styrene-free polyester, styrene/vinylester or styrene-free vinylester, vinylester urethane, furan, phenol, water glass, epoxy, methacrylate, isocyanate or the like. The resin should be curable, e.g. by application of heat or radiation, for an irreversible transition from a soft and flexible state into a hardened state. One example of such a liner may be found in EP 1 920 913, to which reference is made.

The fibre material may be e.g. a glass fibre material or felt material, which is flexible and at the same time may hold a large quantity of resin. The material should exhibit affinity to the resin to allow the resin to soak the liner completely.

Further prior art documents include GB 1,080,562 which relate to a vacuum lock having a n umber of rubber seals, and JPH04193506 relating to a method of impregnating fibre bundles with resin by bringing the fibre bundle in contact with a nozzle and injecting the resin into the bundles.

Also from GB 1.080.562, a labyrinth gland is known, allowing a glass fibre mat to be introduced into a vacuum chamber. The reference, however, fails to describe the essential feature of degassing the mat by compressing the mat in the labyrinth gland.

From JPA 61051312 a further degassing vacuum chamber is known, in which a labyrinth gland similar to the above described structure known from GB 1.080.562 is described. Similar to the GB reference, the Japanese reference fails to describe the essential feature of degassing the material by compressing the material in the labyrinth gland.

From US 3,730,678, a technique of treating textile fibres is known. The reference, however, includes no vacuum lock. On the contrary, the technique involves the pressurizing of the treatment chamber by injection of steam or suitable reaction vapour or air into the reaction chamber.

The liner is typically impregnated by submerging the liner in a resin bath. When the liner is submerged, the resin will enter into the fibre material structure of the liner, such that the liner is soaked with resin. Thereafter the resin may be partially cured to achieve the soft and flexible state and avoid resin leaking from the liner.

When impregnating the liner using the above technology, there is a need to ensure that no voids exist inside the liner. Such voids may be gas (air) bubbles trapped inside the fibre material after impregnation. Voids of any kind will constitute weak spots when the liner has been cured and may lead to premature degradation and damage to the liner. Voids may further lead to cracking of the liner and possibly to a leakage.

It is therefore an object according to the invention to provide a method and a system for impregnating a liner and at the same time reduce the risk of a void inside the liner after curing.

The above need and the above object together with numerous other needs and objects which will be evident from the below detailed description are according to a first aspect of the present invention obtained by an impregnation station in accordance with claim 1.

The liner is impregnated while being conveyed through a vacuum lock and a resin bath. The liner is made of a soft and porous fibre material, such as a woven or non-woven material or fabrics or combination comprising glass fibre, polyester or felt or a combination of the above. The material should preferably have a high resin affinity. The porous structure of the fibre material will contain a large volume of air. The air volumes may be encapsulated in resin during impregnation and constitute voids after curing. To avoid the above the liner is first of all compressed between two sealing elements to remove a substantial amount of the air located inside the liner. It must however be ensured that the liner is not crushed or damaged when compressing the liner. Therefore, the pressure applied to the liner by the sealing elements is limited. Consequently, some amount of residual air will remain inside the liner after degassing. The sealing element may comprise sealing lips or rollers or the like. The sealing element should be soft to allow it to deform and correspond to the compressed shape of the liner such that any air leakage is minimized.

To remove the residual air in the liner it is subsequently allowed to expand inside a low pressure space, which may define a low pressure chamber. The low pressure chamber is connected to a constantly running vacuum pump such that the low pressure chamber may define a partial vacuum. The residual air in the liner will expand in the low pressure chamber and the vacuum pump will suck away any residual air from the low pressure chamber. The liner will thereby become substantially degassed.

The liner subsequently enters the resin bath. Resin bath should in the present context be understood to mean any volume or body of liquid resin without specifying any particular shape. To ensure that the liner is completely soaked and all cavities in the liner are filled with resin in the resin bath, a resin jet is propelled against the liner. The resin jet will allow resin to penetrate deep into the liner by applying a resin pressure and a velocity at the liner. The flow jet is propelled from a nozzle connected to a pipe system and a pump is used to pump resin from the reservoir towards the liner. The flow jet will allow the resin to penetrate deeper into the liner and fill out the cavities better than by e.g. submerging the liner. The word "nozzle" should be understood to mean any form of fluid outlet having either a constant or a varying shape, e.g. a straight shape, a converging shape or a diverging shape. The ambient pressure space is understood to encompass any space having atmospheric pressure.

The resin reservoir may constitute a resin receptacle for receiving excess resin. By excess resin is meant any resin exiting the resin bath while not being accommodated inside the liner. Excess resin is a result of a pressure in the resin bath/nozzle and is preferred since it shows that resin has penetrated the liner and impregnated it sufficiently. The excess resin is collected in the resin receptacle and may be re-used by re-circulating it to the resin bath via the nozzle. A filter may be employed in the resin receptacle to remove any contamination such as fibres from the liner in the excess resin to avoid clogging the nozzle or pipe system.

The impregnation station may have a first end being in gas-tight communication with said outlet of said vacuum lock and a second end being in gas-tight communication with a further vacuum lock, said further vacuum lock comprising a further housing having a further inlet and a further outlet and defining a further ambient pressure space near said further outlet and a further low pressure space near said further inlet, said further ambient pressure space and said further low pressure space being separated by a substantially gas-tight further seal comprising a further first sealing element and a further second sealing element located juxtaposed said further first sealing element, said further first and second sealing elements being flexible for allowing said fibrous liner to be conveyed through said further seal between said further first sealing element and said further second sealing element in a direction from said further inlet towards said further outlet. The working principle of the further vacuum lock is reversed compared to the original vacuum lock. The further vacuum lock should apply a very limited force on the liner to avoid pressing out any resin accommodated inside the liner. It should be noted that the two vacuum locks may have different working principles, i.e. one may employ sealing lips while the other may employ rollers.

The impregnation station has a first end being in gas-tight communication with said outlet of said vacuum lock and a second end being open to the outside ambient pressure, said first end and said second end being separated gas-tight by said resin. The resin will thus act as a further vacuum lock comprising a liquid vacuum lock between the low pressure space and the ambient air pressure. A liquid vacuum lock will have the additional advantage of substantially zero leakage. The ambient air pressure acting on the resin at the second end will act as a pressure force to push the resin towards the first end. This pressure may be balanced by the pressure inside the resin bath generated by the supply of resin from the nozzle and pipe system. Alternatively, the pressure force may be balanced by the gravity force from the resin such that the gravity force of the pile of resin located near the first end and above the resin level of the second end compensates the pressure force of the ambient air pressure. Thus, the resin level at the first end of the receptacle will be higher than the resin level at the second end.

The resin bath is formed between said first and second end by the continuous supply of resin by said nozzle. This way, the resin bath must not comprise a reservoir suitable for permanently storing the resin, but may simply comprise a defined space where resin and liner may interact. This means the continuously supplied resin may either be accommodated inside the liner or exit the resin bath as excess resin. The resin bath may thus comprise e.g. a partially enclosed volume or alternatively a single surface or the resin bath may be entirely defined by the continuous supply of resin.

The impregnation plant may comprise a system for monitoring the level of resin in said resin reservoir. Such system may range from a simple floatation device inside the resin reservoir to more advanced radar detectors for detecting the surface of the resin in the resin reservoir.

The impregnation plant may comprise a resin supply tank and a resin supply pump for delivering resin from said resin supply tank to said resin reservoir. When the liner is constantly impregnated the resin level in the resin reservoir will sink. To compensate for this and to keep the resin level constant, resin must be injected into the resin reservoir. This may be done by delivering resin to the resin reservoir from a nearby resin supply tank via a pump.

The impregnation plant may comprise two nozzles mounted in a juxtaposed position for applying the resin on both sides of said liner. The nozzles are preferably mounted such that the resin flow jet is applied perpendicular to the liner surface. Since the resin can penetrate the liner from two opposite directions, the resin needs only penetrate half the distance compared to when the resin jet is only applied from one direction. This way the resin needs not penetrate the entire liner and the risk of voids will be additionally reduced. The impregnation plant may further comprise a plurality of nozzles, such as 2-1000, preferably 100-800, more preferably 400-600, most preferably 400, or alternatively 200-400, or alternatively 400-600. The nozzles should be equally distributed such that the whole surface of the liner is subjected to the resin flow jet, and preferably equally distributed on each side of the liner. If some areas of the liner are not subjected to the resin jet, they may not be completely impregnated and consequently a void may arise there.

The impregnation plant may comprise a low pressure space having an absolute pressure lower than 100 kPa, preferably 10-90 kPa, more preferably 50-70 kPa, most preferably 60 kPa, or alternatively 50-60 kPa, or alternatively 60-70 kPa. Lower pressure will reduce the amount of voids in the liner. High vacuum is costly to achieve and maintain and will in most cases not be necessary to achieve the intended void-free result.

The impregnation plant may comprise a system for monitoring the pressure in said low pressure chamber. Such a system may comprise a pressure sensor in the low pressure space. The pressure in the low pressure space should be controlled since it influences the amount and severity of any voids in the liner and may additionally influence the resin level.

The sealing element may comprise a roller seal or alternatively a lip seal or yet alternatively a roller+lip seal. A roller has the advantage of being able to provide a gas-tight seal with low wear compared to the alternative lip seals. The roller may in turn preferably be sealed by lip seals in relation to the housing.

The roller may comprise rubber foam. Rubber foam is a soft and air-tight material which may preferably be used for the rollers. By having soft rollers the airtight properties may be realized without any need of compressing the liner excessively.

The liner may be guided through said device by one or more guiding rollers. The guiding rollers as well as the rollers in the vacuum lock may be driven by a motor, such as a pneumatic motor or an electric motor. In this way the liner may be conveyed inside the impregnation plant.

The vacuum lock may be having more than 2 rollers, such as e.g. 3-10 rollers, or preferably 6 rollers. Having a series of rollers will improve the sealing quality by providing additional compartments having a pressure between the pressure of the low pressure compartment and the ambient pressure. In this configuration the pressure difference across a pair of rollers will be lower and consequently the amount of gas leaking through the seal will be lower. The rollers may be configured in juxtaposed pairs in a row, or alternatively form a sequence where each roller, except the first and the last, is juxtaposed to 2 other rollers. The compartments formed between the rollers may optionally be connected to a vacuum pump.

The impregnation plant may comprise a control unit. A control unit may be used to control the different features of the invention, such as the pressure in the low pressure space, the pressure of the resin jet, the level of resin, the velocity of the liner and many other features, which will be evident from the description.

The liner may be submerged in the resin reservoir. The submersion of the liner may be used in addition to the flow jet for impregnating the liner. The submersion may be performed either before, during or after applying the flow jet.

The resin-filled receptacle comprises a first vessel having an elongated and substantially vertical orientation and defining an upper inlet and a lower outlet, a second vessel having an elongated and substantially vertical orientation and defining a lower inlet and an upper outlet, and a third vessel connecting the lower outlet and the lower inlet. Upper and lower should in this context be understood in relation to the earth gravity. The shape described above has been proved to be the most efficient concerning material use. If vacuum is applied to the upper inlet, the resin level will rise in the first vessel and fall in the second vessel if it is assumed that ambient pressure is applied to the second opening. The earth gravity and ambient pressure determine the resin levels as discussed above. Assuming earth conditions, typical vacuum pumps/seals and typical resin density, the resin-filled receptacle and/or said second vessel of said resin-filled receptacle should have/has an elongation of 1-10 meters, preferably 2-6 meters, more preferably 3-5 meters, and most preferably 4 meters, or alternatively 2-4 meters, or alternatively 4-6 meters.

The impregnation plant may comprise a pre-curing device for applying radiate energy onto said liner after impregnation. Such pre-curing may be achieved by applying radiate energy directly after impregnation of the liner. This way the resin will attach better to the liner.

The vacuum lock comprises a housing having an inlet and an outlet and defining an ambient pressure space near said inlet and a low pressure space near said outlet, said ambient pressure space and said low pressure space being separated by a substantially gas-tight seal comprising a first sealing element and a second sealing element located juxtaposed said first sealing element, said first and second sealing elements being flexible for allowing a fibrous liner to be conveyed through said seal between said first sealing element and said second sealing element in a direction from said inlet towards said outlet, said liner being degassed by compressing said liner into a compressed state between said first and second sealing elements and subsequently relaxing said liner into a substantially uncompressed state inside said low pressure space. From the above it is evident that the vacuum lock may be used as a stand-alone unit. The above vacuum lock will allow a liner to enter from an ambient pressure space into a low pressure space with a low leakage. At the same time the liner is compressed and drained from gas located inside the liner. The rollers are preferably connected to a motor such that the liner is driven and guided through the vacuum lock. It is further evident that the vacuum lock may be used in the opposite direction, i.e. for conveying a liner from a low pressure space to an ambient pressure space or alternatively from a high-pressure space to a low pressure space or vice versa.

The impregnation station comprises a resin bath for accommodating said liner, a resin reservoir, a nozzle, a pipe system and a resin pump for propelling said resin from said resin reservoir via said pipe system and said nozzle into said resin bath in a direction towards said liner. From the above it is evident that the impregnation station from the first aspect of the invention may be used as a stand-alone unit. The above impregnation station may preferably be made substantially flat and compact.

From JPA 04193506, a technique of impregnating fibre bundles by the use of melted resin is known. The reference, however, describes no technique in relation to the impregnation of a fibrous liner, i.e. a structure including fibres orientated in a multiplicity of direction or in any arbitrary direction and constituting a structure similar to a mat. The impregnation of the fibre bundles by use of a melted resin is according to the teachings of the Japanese reference performed under an elevated pressure or high pressure as distinct from the technique according to the present invention, according to which technique the impregnation is performed in a degassed or low pressure chamber.

The above need and the above object together with numerous other needs and objects which will be evident from the below detailed description are according to a second aspect of the present invention obtained by a method of impregnating a liner in accordance with claim 2. It has been shown that by impregnating a liner according to the above method the amount of voids caused by air/gas bubbles inside the liner will be considerably reduced. The method may be applied as a continuous process where a liner of infinite length is impregnated and afterwards cut into suitable lengths. Alternatively, the liner is cut into suitable lengths before entering the impregnation plant. Yet alternatively, the method may be applied in a mobile impregnation plant, e.g. where the impregnation plant is mounted on a truck for on-site impregnation and installation.

It is further evident that numerous variations of the systems and methods described above are possible, in particular by combining some of the features of the aspects and embodiments described above. A detailed description of the figures of five specific embodiments follows below.

With reference to the drawings, fig. 1 shows a side cut-out view of a first and currently preferred embodiment of an impregnation plant, fig. 2 shows a further embodiment of a compact impregnation plant, which may be suitable for a mobile impregnation plant, fig 3 shows two different embodiments of a vacuum lock for use with an impregnation plant, and fig 4 shows an impregnation station in accordance with the claimed invention for use in an impregnation plant.

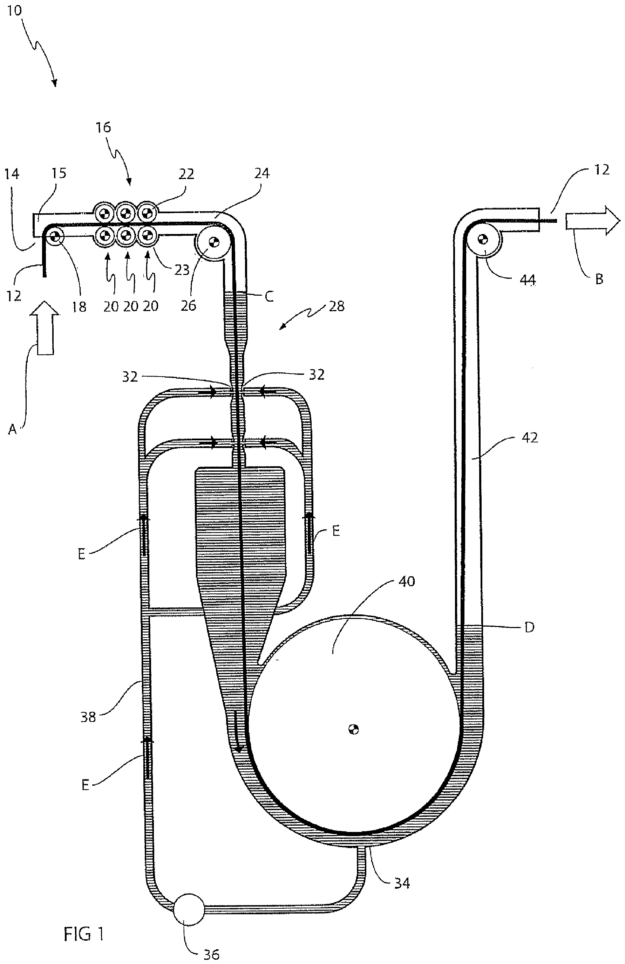

Figure 1 shows an impregnation plant 10 for impregnating a liner 12 with a resin. The resin is indicated in figure 1 by hatching. The liner 12 is used for lining and re-lining pipelines such as sewer pipelines. The liner 12 is made of a glass fibre material or alternatively a felt material or a combination. The liner 12 has a flat shape with an indefinite length and a predefined width, which is determined according to the circumference of the pipeline, which is going to be lined. The width of the liner 12 may typically range from a few centimetres up to a few meters. The liner 12 is conveyed in a travelling direction according to the arrow A and enters the impregnation plant 10 at an opening 14. The liner 12 is transported and directed via a first guiding roller 18 through the opening 14 into an ambient pressure chamber 15. The ambient pressure chamber 15 and a low pressure space 24 together form parts of a vacuum lock 16. The vacuum lock is divided into the ambient pressure chamber 15 and the low pressure space 24 by three vacuum seals 20 mounted in a row. Each vacuum seal 20 comprises two juxtaposed mounted sealing rollers 22, 23. The sealing roller 22 has a circular shape and has a flexible surface. The sealing roller 22 may preferably be made of a flexible and pressure-tight material such as e.g. rubber to achieve a good sealing effect. The sealing roller 22 is mounted such that it seals the space between the wall of the vacuum lock 16 and the juxtaposed mounted sealing roller 23 substantially gas-tight. The sealing roller 22 is preferably made to apply a force to the wall of the vacuum lock 16 as well as to the juxtaposed mounted sealing roller 23. The force may deform the sealing rollers 22, 23 slightly. Optionally, a separate gasket may be used to improve the sealing and/or reduce the friction between the wall of the vacuum lock 16 and the sealing roller 22. Such a gasket should be made of low friction material. The sealing rollers 22, 23 rotate in opposite rotational directions such that the liner 12 may be transported in the travelling direction between the rollers 22, 23.

The liner 12 is compressed between the sealing rollers 22, 23 such that no substantial amount of air may leak into the low pressure space 24 between the rollers 22, 23. The sealing rollers 22, 23 should be made significantly less flexible than the liner 12, such that the liner 12 is compressed to a fully compressed state. The fully compressed state should be understood to mean the state where the liner 12 is compressed by the rollers 22, 23 to its maximum flexibility, but still may resume a uncompressed state, i.e. substantially the initial state, when relaxed, i.e. when the compression force from the rollers 22, 23 is removed. During the compression the force from the rollers 22, 23 must not permanently deform the shape of the liner 12 or substantially damage the material, such that the uncompressed state is not reached when removing the compression force. The sealing rollers 22, 23 may optionally be spring-loaded in direction towards each other for the rollers 22, 23 to be able to apply a higher pressure onto the liner and at the same time to be able to adapt to any unevenness of the liner 12.

The compartments between the seals 20 may have a pressure between the pressure of the low pressure space 24 and the ambient pressure. This reduces the pressure force and sealing requirement of each separate vacuum seal 20. Optionally, the compartments between the vacuum seals 20 may be connected to a vacuum pump (not shown) for achieving a lower pressure inside the low pressure space. Alternatively, a pressure regulator may be used to define a specific pressure inside each of the compartments between the vacuum seals 20.

After the vacuum seals 20 the liner enters the low pressure space 24. The rollers will have removed the most of the air inside the liner 12. Inside the low pressure space 24 the liner 12 will resume an uncompressed state. The low pressure space 24 is connected to a vacuum pump (not shown), which preferably is constantly acting to reduce the pressure inside the low pressure space 24. The pressure in the low pressure space 24 should be considerably lower than the ambient (atmospheric) pressure. The vacuum pump may e.g. be of the piston type to achieve a suitable pressure in the low pressure space 24 of around 50% to 70% of the atmospheric pressure. The low pressure inside the low pressure space 24 will allow any residual gas bubbles inside the liner 12 to expand and exit the liner 12. The vacuum pump (not shown) should preferably run continuously to allow a constant low pressure, since a leakage may quickly result in an unsuitably high pressure inside the low pressure space 24.

The liner 12 is directed within the low pressure space 24 by a second guiding roller 26. The vacuum efficiently acts on any gas volumes still present within the liner. Any gas volume inside the liner 12 will expand due to the vacuum and the gas will be sucked away by the vacuum pump (not shown). Consequently, the liner 12 will be degassed of any substantial amount of air left within the liner after the compression by the sealing rollers 22, 23. Any air left within the liner 12 will constitute voids after impregnation. Such voids may compromise the material properties of the impregnated liner and may lead to a rupture of the liner 12.

The liner subsequently enters a resin bath 28. The resin bath 28 is filled with a resin. The resin is preferably a polymeric resin and more preferably a light curable polymeric resin. On each side of the walls of the resin bath 28 a set of nozzles 32 is located. The nozzles 32 constitute a reduced flow area for achieving a flow velocity of the resin through the nozzles 32. The nozzles 32 inject resin into the resin bath 28 towards the liner 12 with a flow velocity such that a jet is formed. The jet is directed towards the liner 12 and interacts with the liner 12. When the jet is interacting with the liner 12 the flow velocity will be reduced and the pressure will be increased. The locally increased pressure at the point of interaction between the flow jet and the liner 12 will allow the resin to enter further into the liner 12. The flow velocity additionally will cause the resin to reach even further into the liner 12. Preferably, a large number of nozzles is used, such as 300 to 500, to ensure that the whole liner 12 is subjected to a flow jet. The nozzles may be placed on both sides of the liner 12 and preferably spread out on the wall of the resin bath 28.

The resin is guided through the resin bath 28 via the bottom 34 of the resin bath 28 via a pump 36 and a pipe system 38 into the nozzles 32, forming a closed circuit. The resin will circulate according to the arrows E indicated in the resin. The liner 12 is further guided by a third guiding roller 40 near the bottom 34 of the resin bath 28. The liner 12 will then exit the resin bath 28 into an ambient pressure space 42. The fourth guiding roller 44 directs the liner 12 out of the resin bath 28 to the outside. The space may optionally be used for pre-curing the resin-impregnated liner 12.

The ambient pressure space 42 may be used for applying pre-curing to the resin. Pre-curing may be applied by a heat or radiation source and has the objective of turning the liquid resin into a semi-solid state. The pre-curing acts to partially cure the resin to achieve a highly viscous liquid for avoiding any resin leaking from the liner 12 and for gaining simplified handling of the liner 12. In subsequent stages the impregnated liner 12 may be wrapped in one or more layers of plastic foil, cut into suitable lengths, folded into transportable packages and loaded on a truck for transportation to an installation site.

It should be noted that there is a difference in resin level inside the resin bath. This is due to the different pressures inside the resin bath 28. The pressure along the direction of the liner from level C to level D will first rise until the lowest point near the bottom 34 is reached. The pressure will fall until the level D is reached. Local pressure deviations may result from the flow jet. In the present embodiment the resin bath 28 constitutes a second vacuum lock. The resin bath takes the shape of a U. The resin level at the end of the resin bath 28 communicating with the low pressure space 24 will be higher than the resin level at the second end communicating with the ambient pressure space, assuming a standard pressure and gravity. The ambient air pressure acting on the resin at the second end will act as a pressure force to push the resin towards the low pressure space. The gravity force from the resin may balance the pressure force such that the gravity force of the pile of resin located near the low pressure space and above the resin level D will compensate the pressure force of the ambient air pressure.

The pressure force acting on the resin is permitting a higher resin pillar on the vacuum side than on the ambient side. The difference in length is calculated according to the specific density of the resin. An ambient pressure of 100 kPa absolute is assumed. The direction of gravity is assumed to be in the direction towards the lower end of the figure. The value of the gravitational constant is assumed to be 9.81 N/kg. Having a resin density of around 1.1 kg/cm³ will yield a resin pillar and minimum height of the resin bath 28 of 9 meters when assuming a perfect vacuum. Assuming less than a perfect vacuum will lower the minimum height of the resin bath 28. Assuming a typical pressure of 60% of the atmospheric pressure inside the low pressure space will yield a minimum height of the resin bath of 4 m. To avoid any leakage of resin due to local pressure fluctuations a safety margin should be applied when dimensioning the resin bath 28.

The resin level C and D should be continuously monitored and additional resin should continuously be delivered to the resin bath 28 to keep the resin levels C and D substantially constant within a certain margin. Resin will continuously exit the resin bath by being impregnated into the liner 12. Preferably, a resin supply tank is connected to the resin bath 28 via a supply pump (not shown), which is controlled by a control system (not shown).

The pressure in the low pressure space 24 should as well be monitored and controlled, since any pressure fluctuation in the low pressure space 24 results in a deviation in the resin levels C and D. A pressure rise in the low pressure space 24 will make the level C drop. To avoid any leakage of resin if the pressure in the low pressure space 24 rises the ambient pressure space 42 should be properly sealed up to the fourth guiding roller 44, located at substantially the same elevation as the vacuum lock 16.

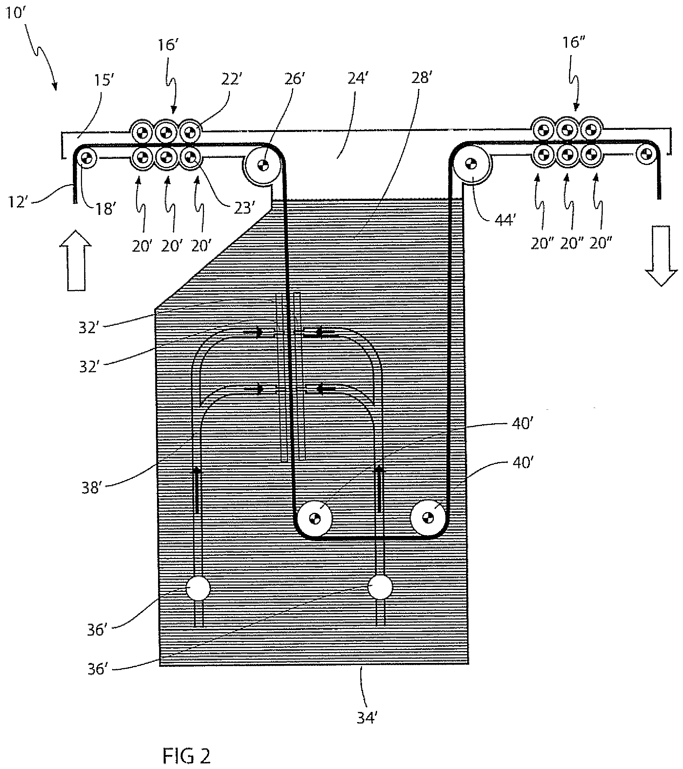

Figure 2 shows a compact impregnation plant 10' for impregnating a liner 12'. The liner 12' is fed by a first guiding roller 18' from an ambient pressure chamber 15' to a low pressure space 24' via a primary vacuum lock 16' comprising a series of three vacuum seals 20'. The functional principle of the vacuum seal 20' is analogous to the description in figure 1. The liner is then guided by a second guiding roller 26' into a resin bath 28' filled with a resin. The resin is indicated in figure 2 by hatching. The resin bath 28' comprises a set of nozzles 32' directing a resin flow jet onto the liner 12'.

The nozzles 32' are fed with pressurized resin from a pipe system 38' connected to a pump 36'. The pump 36' sucks resin from the bottom of the resin bath 28' forming a closed circuit. The liner 12' is fed through the resin bath 28' and back into the low pressure space 24' by a third guiding roller 40', which in the present embodiment constitutes a pair of rollers. The liner 12' is subsequently guided in an opposite direction in relation to the primary vacuum seals 20' by a fourth guiding roller 44' and exits the low pressure space via a secondary vacuum lock 16". The functional principle of the secondary vacuum lock 16" is analogous to the primary vacuum lock 16', except for the conveying direction being reversed, i.e from the low pressure space 24' into the ambient pressure space 42'.

The above embodiment has the drawback of needing a secondary vacuum lock 16", which rollers may cause some resin to leak from the liner 12'. This may be partially prevented by a pre-curing before the liner 12' is exiting the low pressure space 24'. The advantage of the above embodiment is the compact shape, making it a preferred alternative for a mobile impregnation plant.

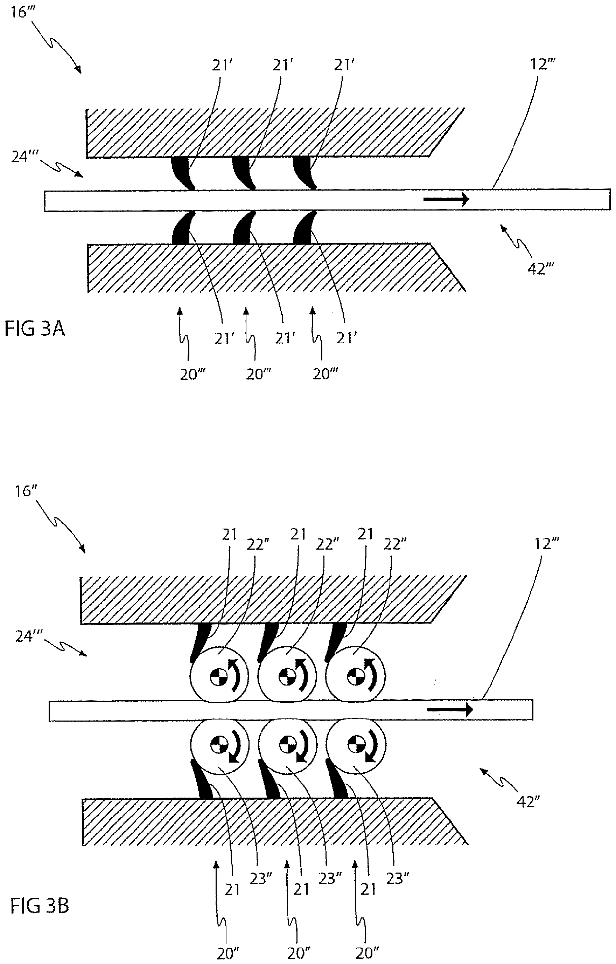

Figure 3a shows a close up view of a vacuum lock 16"' having lip seals. The vacuum lock 16'" is located between a low pressure space 24"' and an ambient pressure space 42"'. The vacuum lock 16"' comprises 3 vacuum seals 20"', each comprising two juxtaposed lip seals 21'. A liner 12'" is propagated through the vacuum seals 20'" between the lip seals 21'. The lip seals 21' seal the area between the wall of the vacuum lock 16"' and the liner 12"' pressure-tight. The lip seals 21' are preferably made of rubber or any similar soft material. The compartments between the vacuum seals 20"' will have reduced pressure as well. They may optionally be connected to a vacuum pump or pressure regulator.

Figure 3b shows a close up view of an alternative embodiment of a vacuum lock 16. In the alternative embodiment the vacuum seals 20" additionally comprise two juxtaposed rollers 22", 23". A liner 12" is propagated through the seal between the rollers 22", 23". The rollers 22", 23" are made of soft material, such as rubber foam, to achieve good sealing properties and at the same time avoid damage to the liner 12". The rollers 22", 23" are sealed towards the wall of the vacuum lock by lip seals 21', preferably made of flexible material such as rubber. Using rollers 22", 23" will reduce the resistance caused by friction when the liner is passing through the vacuum seals 20". High resistance may cause damage to the liner 12" since a high force is then needed to drive the liner 12" through the vacuum seals 20". The rollers 22", 23" may optionally be motorized for additional reduction of the resistance.

The above embodiments may also be combined as a lip and roller seal. From the above it is evident to any person skilled in the art that the above vacuum locks may be employed to bridge not only a low pressure space and an ambient pressure space, but also a low pressure space and a high pressure space or an ambient pressure space and a high pressure space. It is further evident to the skilled person that the conveying direction of the liner may be reversed without any further changes to the vacuum lock. The arrow in figs. 3a and 3b shows only a preferred conveying direction.

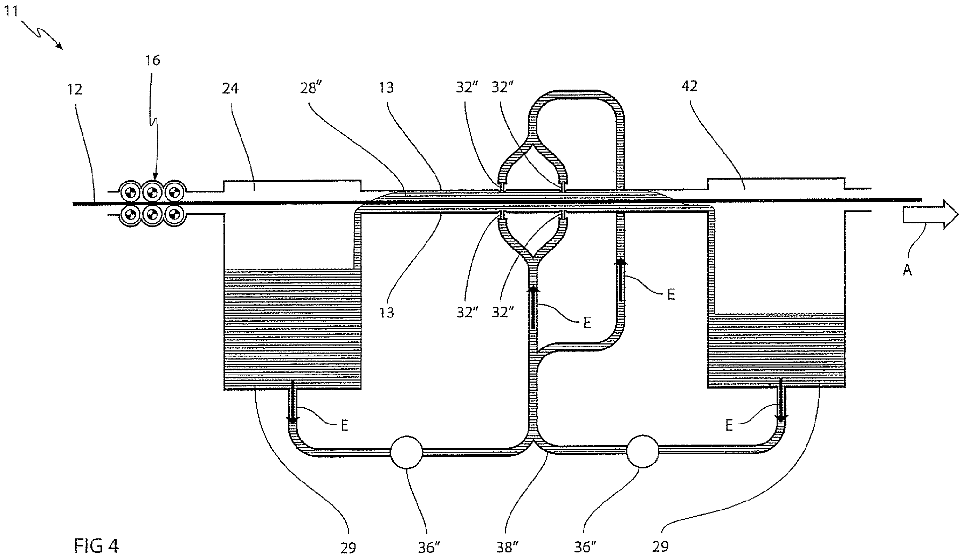

Figure 4 shows an embodiment according to the present invention featuring an impregnation station 11, which may be used in connection with the above vacuum lock 16. The impregnation station 11 comprise two parallel plates 13 located close to each other and defining a resin bath 28" between them. The plates 13 and thereby the resin bath 28" extends between a low pressure space 24 and an ambient pressure space 42. The distance between the plates is approximately equal to the thickness of the liner 12, such that the liner 12 may be accommodated between the plates 13. The liner 12 is conveyed through the resin bath 28" between the plates 13 from the low pressure space 24 to the ambient pressure space 42 in the direction of the arrow A.

Each plate 13 comprises a set of nozzles 32" connected to a pipe system 38". A pump 36" propels the resin, which is indicated in figure 4 by hatching, from a resin reservoir 29 via the nozzles 32" towards the liner 12. The liner 12 is thereby subjected to a pressurized resin jet from both sides. The continuous flow of resin will fill the resin bath 28" with resin. Due to the pressure of the resin a large amount of resin will penetrate deep into the liner and fill all the cavities of the liner with resin. Some resin will however not enter the liner 12 but exit the resin bath 28" outside the liner as excess resin. The excess resin will due to the pressure propagate towards the low pressure space 24 and in the opposite direction towards the ambient pressure space 42. The viscosity of the resin will cause the excess resin to propagate slowly outside the resin bath 28". A continuous supply of pressurized and viscous resin will completely fill the resin bath 28" and thus act as a liquid pressure seal between the low pressure space 24 and the ambient pressure space 42. It should be noted the resin bath 28" is not completely encapsulated and a continuous flow of resin is required for impregnation and good sealing quality.

The excess resin is allowed to slowly drip off the resin bath 28" and may preferably be collected into the resin reservoir 29 outside the resin bath at both sides. The excess resin may thus be re-used by re-circulating it according to the arrows E from the resin bath via the pump 36" and nozzles 32" into the resin bath 28" towards the liner 12 and possibly again into the resin reservoir 29. A filter or the like may be applied in the resin reservoir 29 to remove any contamination from the used resin. Such contamination may be fibres of fibre particles released from the liner 12 during impregnation. Such contamination may possibly clog the nozzles 32", the pipe system 38" or the pump 36".

### List of parts

10. Impregnation plant
11. Impregnation station
12. Liner
13. Plate
14. Opening
15. Ambient pressure chamber
16. Vacuum lock
18. First guiding roller
20. Vacuum seal
21. Lip seal
22. Sealing roller
23. Sealing roller
24. Low pressure space
26. Second guiding roller
28. Resin bath
29. Resin reservoir
32. Nozzle
34. Bottom
36. Pump
38. Pipe system
40. Third guiding roller
42. Ambient pressure space
44. Fourth guiding roller
A & B. Liner-conveying direction
C & D. Resin level
E. Resin circulation direction

It should further be noted that a prim (') symbol in the description and in the figures denotes an alternative realization of the same part.

## Claims

1. An impregnation station (11) comprising two parallel plates (13) located close to each other and defining a non-encapsulated resin bath (28") between them, the plates (13) and thereby the resin bath (28") extending between a low pressure space (24) and an ambient pressure space (42), the impregnation station (11) further comprising a liner (12) accommodated between the plates (13) and the distance between the plates (13) being approximately equal to the thickness of the liner (12), the liner (12) being conveyable through the resin bath (28") between the plates (13) from the low pressure space (24) to the ambient pressure space (42), each plate (13) comprising a set of nozzles (32") connected to a pipe system (38") and a pump 36" for:
propelling the resin from a resin reservoir (29) via the nozzles (32") towards the liner (12), thereby subjecting the liner (12) to a pressurized resin jet from both sides,
filling the resin bath (28") with resin by continuous flow of resin acting as a liquid pressure seal between the low pressure space (24) and the ambient pressure space (42), and
causing a large amount of resin to penetrate deep into the liner and fill all the cavities of the liner with resin due to the pressure of the resin, whereas some resin will not enter the liner (12) but exit the resin bath (28") outside the liner as excess resin and due to the pressure and the viscosity of the resin propagate slowly outside the resin bath (28") towards the low pressure space (24) and in the opposite direction towards the ambient pressure space (42).

2. A method of impregnating a liner (12) by providing an impregnation station (11), the impregnation station (11) comprising two parallel plates (13) located close to each other and defining a non-encapsulated resin bath (28") between them, the plates (13) and thereby the resin bath (28") extending between a low pressure space (24) and an ambient pressure space (42), the distance between the plates (13) being approximately equal to the thickness of the liner (12), each plate (13) comprising a set of nozzles (32") connected to a pipe system 38" and a pump (36"), the method further comprising the steps of:
accommodating the liner (12) between the plates (13),
conveying the liner (12) through the resin bath (28") between the plates (13) from the low pressure space (24) to the ambient pressure space (42),
propelling the resin from a resin reservoir (29) via the nozzles (32") towards the liner (12) using the pump (36"), thereby subjecting the liner (12) to a pressurized resin jet from both sides,
filling the resin bath (28") with resin by continuous flow of resin acting as a liquid pressure seal between the low pressure space (24) and the ambient pressure space (42), and
causing a large amount of resin to penetrate deep into the liner and fill all the cavities of the liner with resin due to the pressure of the resin, whereas some resin will not enter the liner (12) but exit the resin bath (28") outside the liner as excess resin and due to the pressure and the viscosity of the resin propagate slowly outside the resin bath (28") towards the low pressure space (24) and in the opposite direction towards the ambient pressure space (42).

## Patentansprüche

1. Imprägnieranlage (11) umfassend zwei parallele Platten (13), die nahe beieinander angeordnet sind und zwischen sich ein nicht eingekapseltes Harzbad (28") definieren, wobei die Platten (13) und damit das Harzbad (28") sich zwischen einem Raum mit geringem Druck(24) und einem Umgebungsdruckraum (42) erstrecken, wobei die Imprägnieranlage (11) außerdem einen Liner(12) umfasst, der zwischen den Platten (13) angebracht ist, und wobei der Abstand zwischen den Platten (13) ungefähr der Dicke des Liners (12) entspricht, wobei der Liner (12) durch das Harzbad (28") zwischen den Platten (13) vom Raum mit geringem Druck (24) zum Umgebungsdruckraum (42) förderbar ist, wobei jede Platte (13) einen Satz Düsen (32") umfasst, die mit einem Rohrsystem (38") und einer Pumpe 36" verbunden sind, um:
das Harz aus einem Harzreservoir (29) über die Düsen (32") entgegen den Liner (12) einzuführen, wobei der Liner (12) einem unter druckstehenden Harzstrahl von beiden Seiten ausgesetzt wird,
das Harzbad (28") durch einen kontinuierlichen Harzstrom zu füllen, wobei das Harz als eine Flüssigkeitsdruckdichtung zwischen dem Raum mit geringem Druck (24) und dem Umgebungsdruckraum (42) wirkt, und
hierdurch bedingt, dringt eine große Menge Harz tief in den Liner und füllt alle Hohlräume des Liners, auf Grund des Druckes des Harzes, wobei etwas Harz jedoch nicht in den Liner (12) eintritt, sondern aus dem Harzbad (28") außerhalb des Liners als überschüssiges Harz austritt und sich aufgrund des Drucks und der Viskosität des Harzes langsam aus dem Harzbad (28") hin zum Raum mit geringem Druck (24) und in die entgegengesetzte Richtung, in Richtung des Umgebungsdruckraum (42), ausbreitet.

2. Verfahren zur Imprägnierung eines Liners (12) durch Bereitstellung einer Imprägnieranlage (11), wobei die Imprägnieranlage (11) zwei parallele Platten (13) umfasst, die nahe beieinander angeordnet sind und zwischen sich ein nicht eingekapseltes Harzbad (28") definieren, wobei die Platten (13) und damit das Harzbad (28") sich zwischen einem Raum mit geringem Druck (24) und einem Umgebungsdruckraum (42) erstrecken, wobei der Abstand zwischen den Platten (13) ungefähr der Dicke des Liners entspricht (12), wobei jede Platte (13) einen Satz Düsen (32") umfasst, die mit einem Rohrsystem (38") und einer Pumpe 36" verbunden sind, wobei das Verfahren außerdem die folgenden Schritte umfasst:
den Liner (12) zwischen den Platten (13) anzubringen,
den Liner (12) durch das Harzbad (28") zwischen den Platten (13) vom Raum mit geringem Druck (24) zum Umgebungsdruckgebiet (42) zu fördern,
das Harz mittels der Pumpe (36") aus einem Harzreservoir (29) durch die Düsen (32") entgegen den Liner (12) einzuführen, wobei der Liner (12) durch einem unter Druck stehenden Harzstrahl von beiden Seiten ausgesetzt wird,
das Harzbad (28") durch einen kontinuierlichen Harzstrom zu füllen, wobei das Harz als eine Flüssigkeitsdruckdichtung zwischen dem Raum mit geringem Druck (24) und dem Umgebungsdruckraum (42) wirkt, und
hierdurch bedingt, dass eine große Menge Harz tief in den Liner eindringt und alle Hohlräume des Liners auf Grund des Druckes des Harzes mit Harz füllt, wobei etwas Harz jedoch nicht in den Liner (12) eintritt, sondern aus dem Harzbad (28") außerhalb des Liners als überschüssiges Harz austritt und sich auf Grund des Drucks und der Viskosität des Harzes langsam aus dem Harzbad (28") hin zum Raum mit geringem Druck (24) und in die entgegengesetzte Richtung, in Richtung des Umgebungsdruckraum (42), ausbreitet.

## Revendications

1. Station d'imprégnation (11) comprenant deux plaques parallèles (13) localisées proches l'une de l'autre et définissant un bain de résine non-encapsulé (28") entre elles, les plaques (13) et par conséquent, le bain de résine (28"), s'étendant entre un espace de pression basse (24) et un espace de pression ambiante (42), la station d'imprégnation (11) comprenant en outre un revêtement (12) logé entre les plaques (13), et la distance entre les plaques (13) étant environ égale à l'épaisseur du revêtement (12), le revêtement (12) étant transportable à travers le bain de résine (28") entre les plaques (13) à partir de l'espace de pression basse (24) à l'espace de pression ambiante (42), chaque plaque (13) comprenant un ensemble de buses (32") lié à un système de tuyaux (38") et une pompe 36" pour:
propulser la résine d'un réservoir à résine (29) à travers les buses (32") vers le revêtement (12), et par conséquent soumettre le revêtement (12) à un jet de résine pressurisée des deux côtés,
remplir le bain de résine (28") avec de la résine au moyen d'un flux continu de résine agissant comme un joint de pression liquide entre l'espace de pression basse (24) et l'espace de pression ambiante (42), et
causer une grande quantité de résine à pénétrer profondément à l'intérieur du revêtement et remplir toutes les cavités du revêtement avec de la résine en raison de la pression de la résine, tandis qu'une partie de la résine ne va pas entrer dans le revêtement (12), mais sortir du bain de résine (28") à l'extérieur du revêtement comme excès de résine, et en raison de la pression et la viscosité de la résine, elle va se propager lentement à l'extérieur du bain de résine (28") vers l'espace de pression basse (24) et dans la direction opposée vers l'espace de pression ambiante (42).

2. Procédé d'imprégnation d'un revêtement (12) en fournissant une station d'imprégnation (11), la station d'imprégnation (11) comprenant deux plaques parallèles (13) localisées proches l'une de l'autre et définissant un bain de résine non-encapsulé (28") entre elles, les plaques (13) et par conséquent, le bain de résine (28") s'étendant entre un espace de pression basse (24) et un espace de pression ambiante (42), la distance entre les plaques (13) étant environ égale à l'épaisseur du revêtement (12), chaque plaque (13) comprenant un ensemble de buses (32") lié à un système de tuyaux (38") et une pompe 36", le procédé comprenant en outre les étapes de:
loger le revêtement (12) entre les plaques (13),
transporter le revêtement (12) à travers le bain de résine (28") entre les plaques (13) à partir de l'espace de pression basse (24) à l'espace de pression ambiante (42),
propulser la résine d'un réservoir à résine (29) à travers les buses (32") vers le revêtement (12) en utilisant la pompe (36"), et par conséquent, soumettre le revêtement (12) à un jet de résine pressurisée des deux côtés,
remplir le bain de résine (28") avec de la résine par moyen d'un flux continu de résine agissant comme un joint de pression liquide entre l'espace de pression basse (24) et l'espace de pression ambiante (42), et
causer une grande quantité de résine à pénétrer profondément à l'intérieur du revêtement et remplir toutes les cavités du revêtement avec de la résine en raison de la pression de la résine, tandis qu'une partie de la résine ne va pas entrer dans le revêtement (12), mais sortir du bain de résine (28") à l'extérieur du revêtement comme excès de résine, et en raison de la pression et la viscosité de la résine va se propager lentement à l'extérieur du bain de résine (28") vers l'espace de pression basse (24) et dans la direction opposée vers l'espace de pression ambiante (42).
